# EUROPEAN PATENT SPECIFICATION

(11) **EP 0 210 834 B1**
(45) Date of publication and mention of the grant of the patent: **17.03.1993**
(21) Application number: 86305651.1
(22) Date of filing: 23.07.1986
(51) Int. Cl.: H02P 1/42

(54) **Shaded-pole type induction motor**
Spaltpol-Induktionsmotor
Moteur à induction à pôles fendus

(30) Priority: 23.07.1985 GB 8518556; 09.08.1985 GB 8520112; 23.10.1985 GB 8526130
(43) Date of publication of application: 04.02.1987
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Arthur, Bryan Edward

(56) References cited:
- DE-A- 1 538 532
- US-A- 1 859 369
- US-A- 1 970 162
- US-A- 3 760 247
- Handbook of Rotating Electric Machinery,D.V.RICHARDSON, Reston Publishing Company Inc.,1980, pages 514-517

## Description

This invention relates to a shaded-pole type induction motor, having a short circuited coil at an angle (between 0° and 90°) to the pole coil so as to produce two individual fluxes having components in space and time quadrature so as to produce a rotating flux and consequently starting torque.

The traditional shaded-pole motor has a copper ring short-circuited, or a coil short circuited, to get cross phase-starting by making a rotating magnetic field; both copper ring and coil have short-circuit current passing therethrough during normal motor operation, which is energy consumptive and likely to result in local high temperature

US Patent No 1859369 discloses a shaded pole induction motor comprising a rotor and a stator, the stator including two short-circuited motor start-up coils and two sets of field windings which can be differently energised in order to charge the number of poles of the motor.

The aforementioned problem is solved by the features of Claim 1.

The invention will be further described by way of example with reference to the accompanying drawings, in which,
Fig 1 is a sketch of the control of the shading short-circuit coil by centrifugal switch.
Fig 2 is a sketch of the control of shading short-circuit coil by an additional control switch.
Fig 3 is a sketch of an automatic reciprocal heating short circuit.
Fig 4 is an example of an additional double-phase manual switch cut-out for a shaded pole coil.
Fig A is an example of the circuit diagram of the conventional single winding two-speed motor.
Fig B is an example of the circuit diagram of the conventional two-winding four-speed motor.

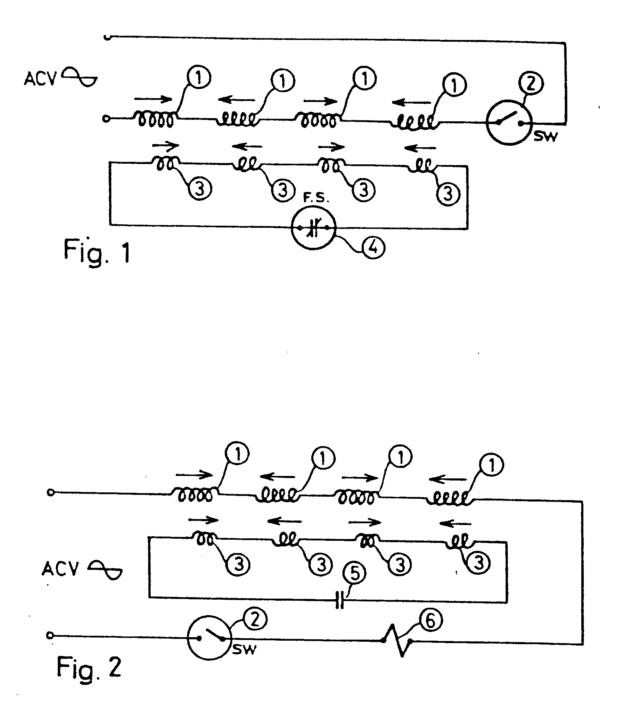

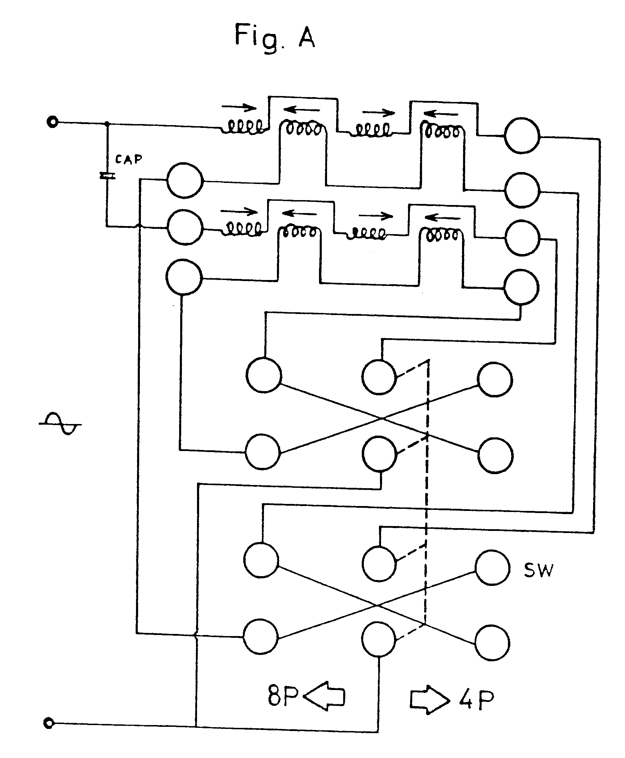

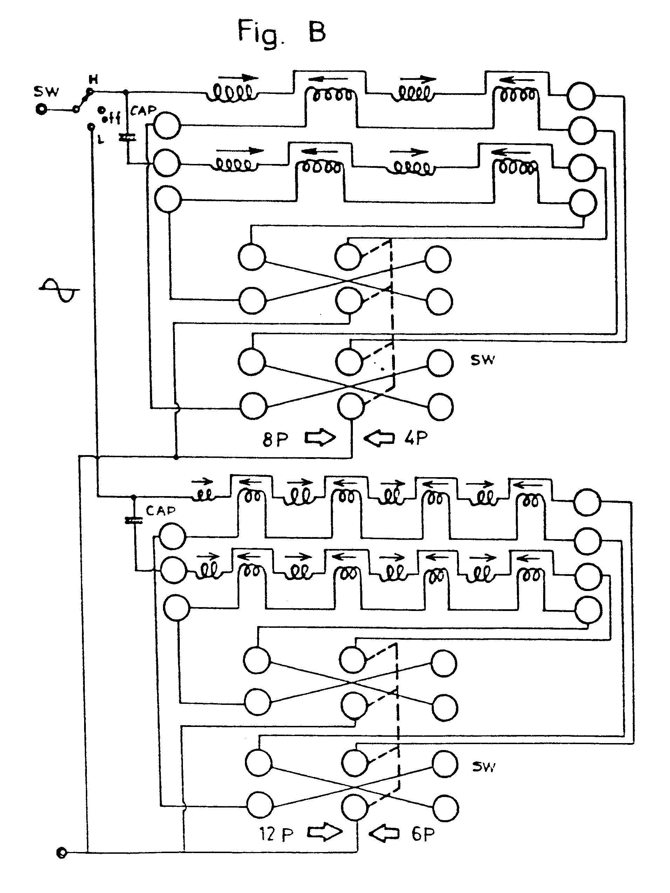

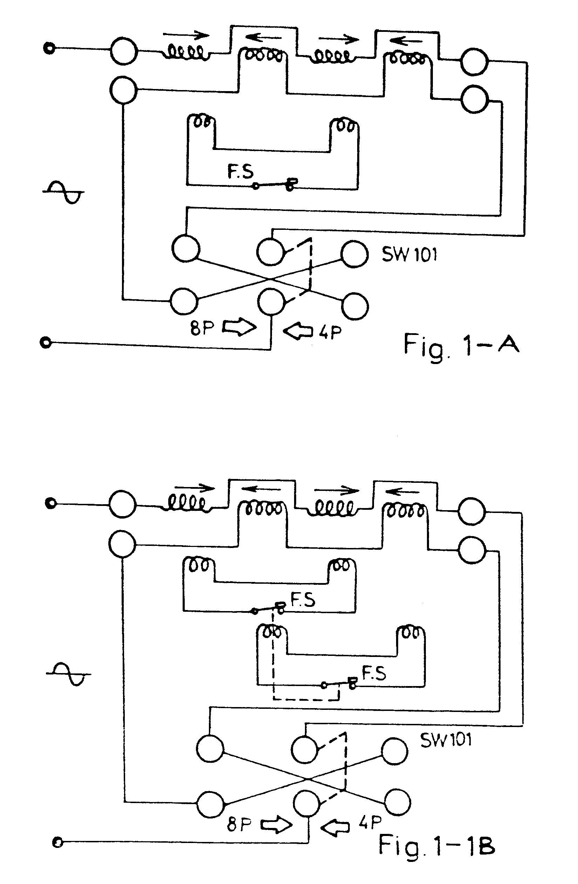

Fig 1-A is an example of the circuit diagram of the winding that can be cut-out.
Fig. 1-B is an example of the circuit diagram for a single winding two-speed motor having a respective pole shaded windings.

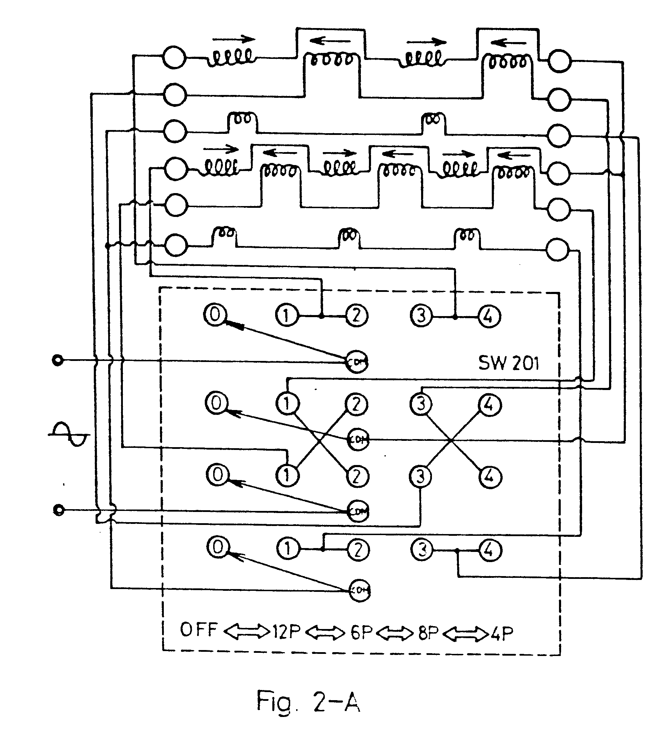

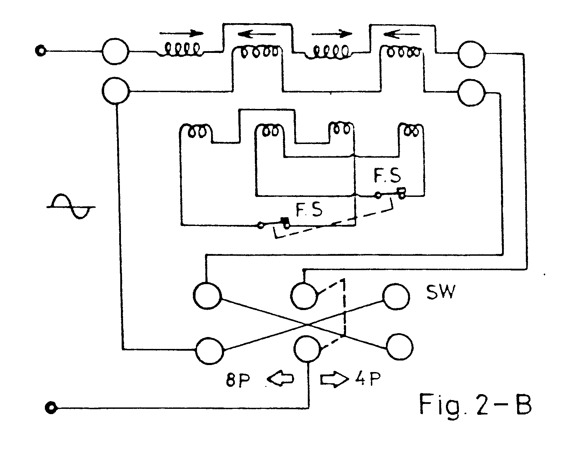

Fig. 2-A is an example of the circuit diagram of various poles respectively having a pole shaded winding connected in series to the same poles and internally added changeover switch.
Fig. 2-B is an example of the circuit diagram of various poles respectively having a pole-shaded winding and separate cut-out switches.

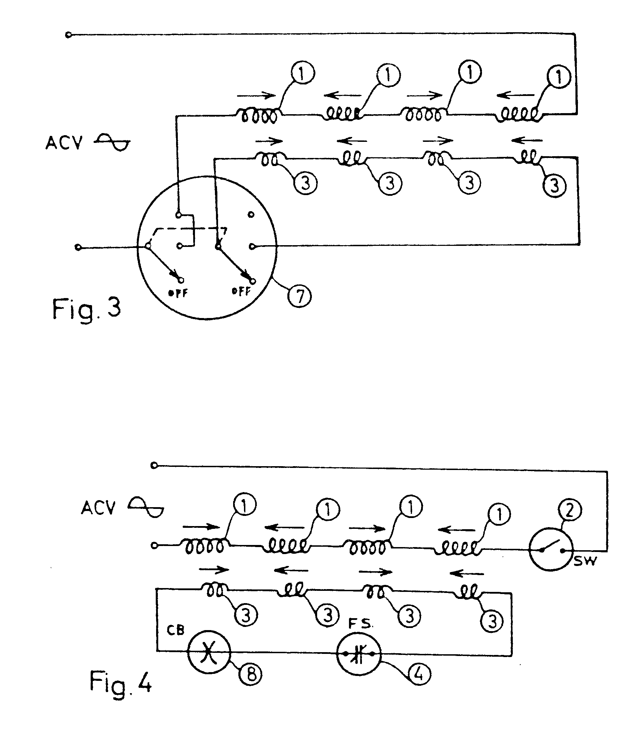

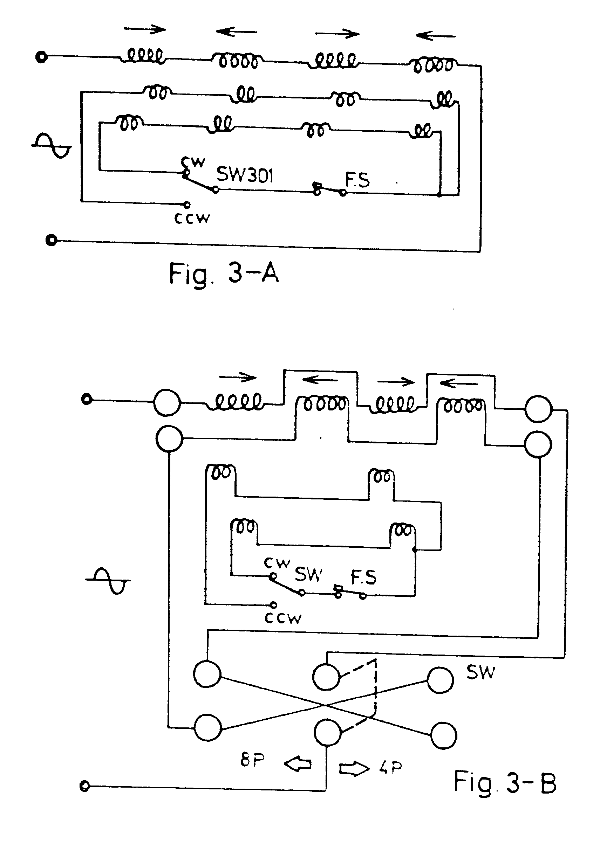

Fig. 3-A is an example of the circuit diagram of the simple speed motor having a too-directional pole-shaded winding and an externally added cut-out switch.
Fig. 3-B is an example of the two-speed motor having a two-directional pole-shaded winding and an externally added cut-out switch.

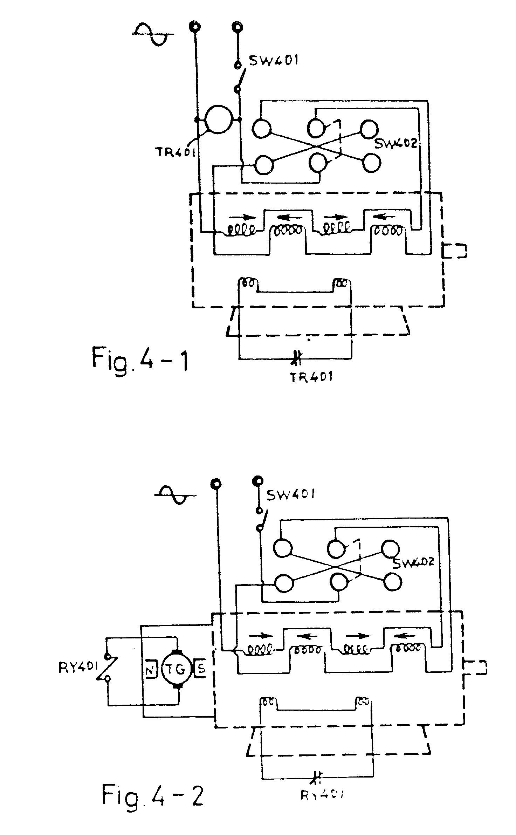

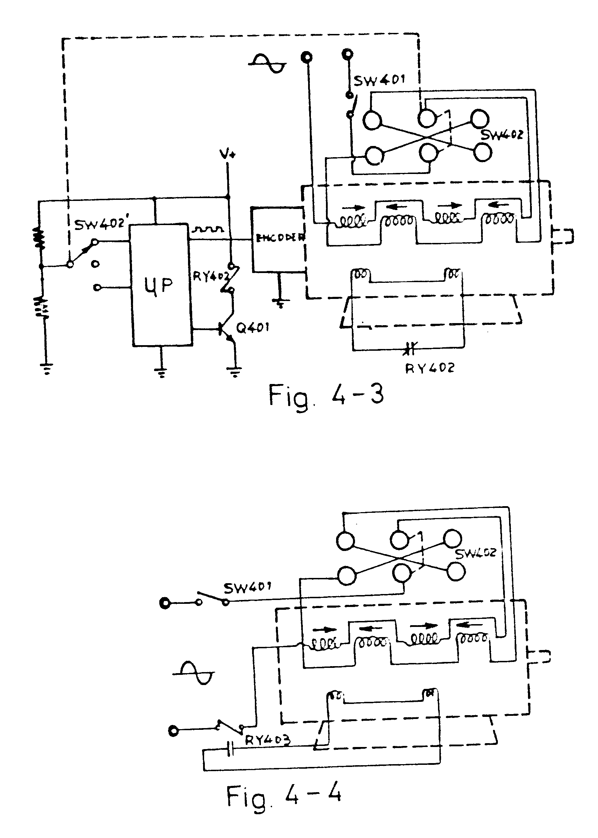

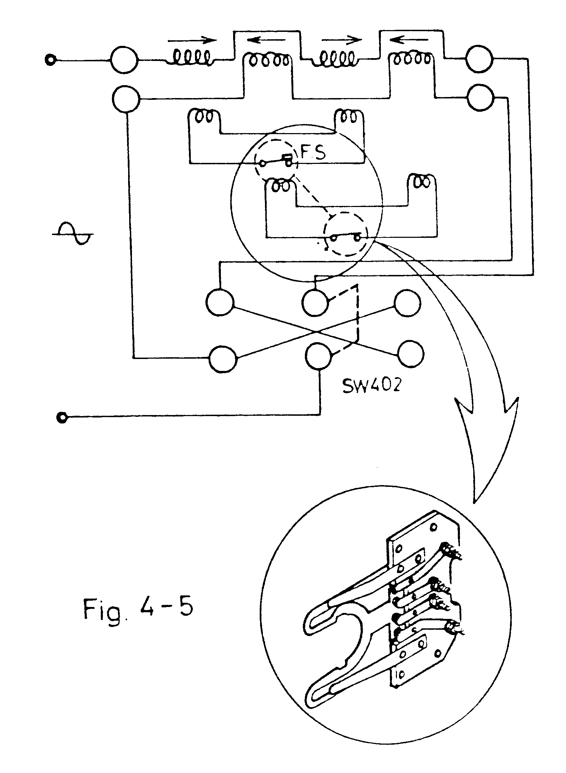

Fig. 4-1 is an example of an externally added timing switch which drives a relay to cut out the pole-shaded winding, when the set time is reached after the motor is started.
Fig. 4-2 is an example of the circuit diagram of the analogic R.P.M generator to drive the pole-shaded circuit to cut out the relay.
Fig. 4-3 is an example of the circuit diagram for a microprocessor to cut out the pole-shaded circuit by accepting an instruction from a digital encoder.
Fig. 4-4 is an example of the circuit diagram for an externally added current relay, to cut out the pole-shaded winding.
Fig. 4-5 is an example of the circuit diagram for a plurality of sets of the contact point-type eccentric switches to cut off the pole-shaded winding.

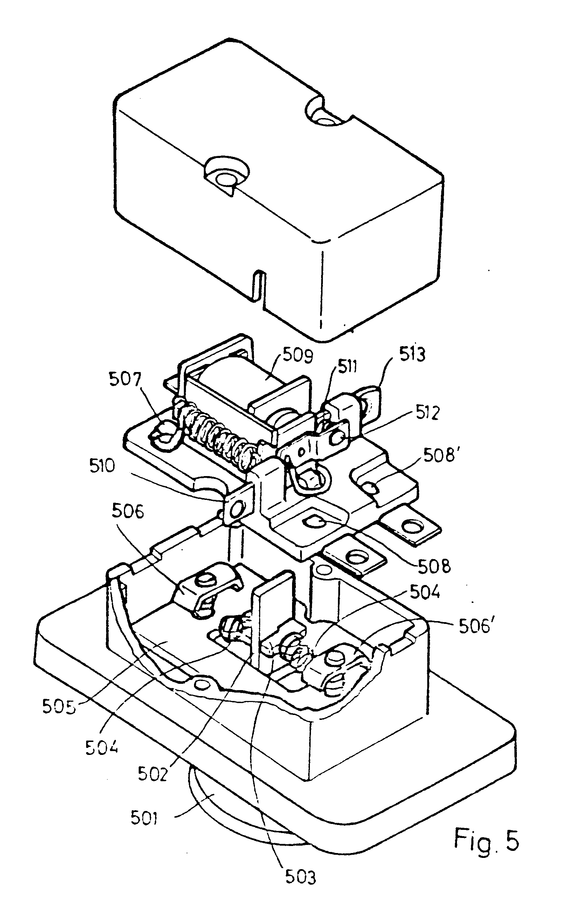

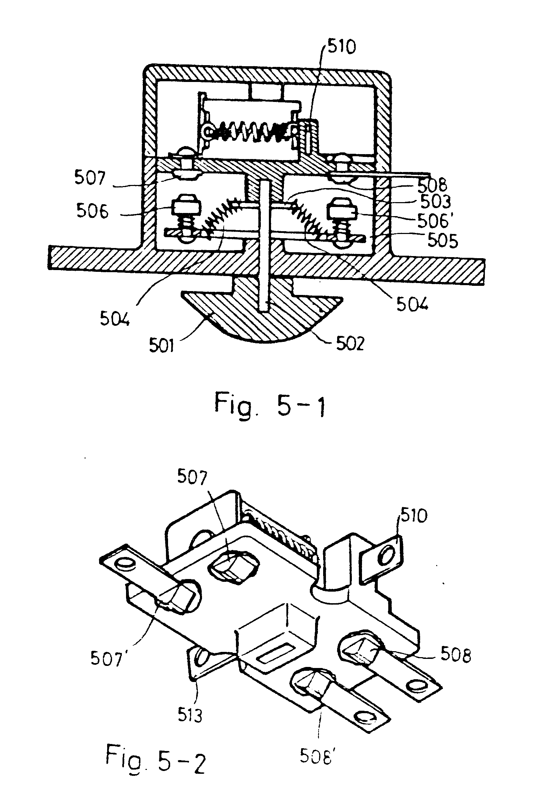

Fig. 5 is an exploded perspective view of a manual and electric-operated integral switch which can be used in my invention.
Fig. 5-1 is a sectional diagram of Fig. 5.
Fig. 5-2 is a contact point distribution diagram of Fig. 5.

As well known in the trade, perhaps the lowest cost and most popularly used single phase induction motor uses cross phase starting method specifically using shaded-pole type starting. Such motors are widely used eg. in electric fans and sand wheels. However, this arrangement and method of motor starting has one common deficiency in that during motor operation after startup there is a continuing short-circuit of the coil, resulting in a waste of energy and causing local over heating likely to reduce the life of the motor and create other problems. One embodiment of my design is to use the shading coil with a centrifugal switch, or an additional switch in series connection, to improve the motor running effeciency over that usually obtained with the known arrangements. The cut-out of the shading short circuit cross phase may be effected by a centrifugal switch, or in an alternative embodiment also by additional switch current detecting cut-out switch. The following description refers to the Fig. 1 arrangement which shows the use of a centrifugal switch to control the shading short circuit in an idea sketch example. This is detailed as follows:
In Fig. 1, (1) is the alternating induction motor operation winding, under switch (2) control. (3) is the cross phase shading coil connected to (4), which is a closed-type centrifugal switch at both ends and to the operation winding used to create a phase-angle difference. When the source is switched on the operation winding is charged and shading coil (3) also has an induced voltage passing through centrifugal switch (4) to provide a short circuit current to form a delayed or out-of-phase magnetic field to form a simular rotating magnetic field as the driving winding to make the squirrel cage rotor start and operate. When the rotor reaches the speed for the centrifugal switch (4), the cross phase shading coil (3) will be cut-out, to stop the current passing therethrough and so as to avoid energy waste and to reduce any local overheating of the motor. The motor will then continue to operate, at better efficiency because of the better magnetic field then since the shading coil is not functioning.
Fig. 2, shows an additional switch of the closed type, which will also cut-out the shading coil when the motor reaches the limit or threshold speed. In the fig. 2 embodiment the current passes to both ends of the closed type connecting point (5) of the action relay in series connection with both ends of the cross phase coil (3), a the coil (6) of the current action relay is series connected between the control switch (2) and operation coil. The another end of the source is joined to the one end of operation winding (1), and the operation coil (1) another end will again be connected with the above-mentioned current action type relay coil (6) when the motor is started, the coil (6) and the connecting point (5) make a cross phase starting short circuit to start the motor. As it is well known, the current will be smaller when the induction motor is started. Therefore, the absorbing force will be smaller when the motor reaches a certain speed to make the connection point break (5) for the shading coil short circuit, to save energy and avoid local overheating.

The Figure 4 embodiment is to avoid consequences should the above centrifugal switch (4) or additional switch unit be damaged and includes a further series connection with automatic reciprocal type heating action type current breaker (8). This unit is usually used a closed type and produces a relative heating when current passes. When the current is too strong, it will act to open after a heat conserving time and then return automatically after cooling, with a cycle action to protect the unit. Usually used for circuit the life will be 20,000 times. The action cycle of 15 seconds will permit temporary short circuit condition for about three days. Therefore, this design is most suitably used eg for sand wheel machines, drilling machines, carpenter's machines, and will protect the cross phase starting coil if the centrifugal switch (6) or additional switch is damaged.

The above centrifugal switch, and additional current action relay are popular widely-available units and the circuit having this design feature of series connection will produce the multiple effect of preventing overheating and energy waste. Further, an additional series automatic reciprocal type heat action type breaker that will serve as a protection is another feature of this design. The contact point of the centrifugal switch and current action type relay can be made by solid type units. There are many alternative mechanical type or solid type units, but this design is aimed at the timely cutting of the shading coil after starting of the shading motor.

In general we propose an electrical machine having shading coils in a start-up circuit in combination with a pole-changing circuit. Preferably the start-up circuit includes a normally-closed centrifugal switch.

The centrifugal switch can be replaced by a separate normally-closed current actuated relay.

Automatic reciprocal type heat action type breaker can be series connected.

Fig 3 is of the demonstrative example of operation for the designer's design of manual pushing and/or pulling and/or rotating switch. The additional switch (7) is a double-pole switch including an open circuit position for disconnecting the source and motor. The eg sand wheel machine will not receive power in this position. When by manual operation it gets to the second position, power is received by the running coil, and the shaded pole start-up circuit is closed, whereupon, the sand wheel machine will be started. Then the manual operation will move the switch to the third phase. In the third phase position the running coil is receiving power continuously and the shaded coil is cut out. This is advantageous to save using a centrifugal switch, which currently will cost US$0.5.

The original manual control main switch is changed into the above positions to be a double-blade-type switch, the cost added will be US$0.125 only which is considered favourable in the keen competitive market.

Required centrifugal switch can be a one unit multi-phase switch for operation after main source control switch and after manual cutout of shaded pole coil after the motor has been started. This switch includes a first position for source cutting, a second position for running with this stator winding power connected, and the shaded pole short circuited, and a third position for running with the coil power connected and the shaded pole cutout circuit operature. The switch includes a rotating ape ration and a pushing and pulling operation.

As to the conventional single phase two-speed pole-changing motors, often a set of travel or induction windings and one start winding set simultaneously effect the changes of the speed-changing connections for the normal and consequent poles, and if more speed requirements for instance 4 speeds, are needed, two sets of the travel windings and two sets of start windings are needed to respectively conduct the changes of the connections for the normal and consequent poles; and similarly, if more poles are available, this same principle also applies accordingly.

We may analyze the construction of the above-said various motors as follows. Now for instance, for a two-speed motor, if we wish to change its speed from 4P to 8P, the changeover point to operate its changeover switch must cover all the changeovers of both the travel and start windings, thus making the changeover switch become a multi-point type; then the connection wires are complicated, or can be seen from reference drawing A so we may understand the complication of the wiring diagram.

Besides, the reference drawing B shows the well-known 4P/8P, 6P/12P driving functional double-winding motor; its wiring is even more complicated, thereby making its economic benefits and operational performances lower.

In the examples shown in the above-said reference drawings, no matter be it include electric induction phase splitting, the current relay for the cut-off (ofter used by the motors on refrigerators), or a capacitance, they all have the same above-said defects of the complicated wiring connections and numerous changeover switch contact points.

A main feature of my improved design presented in the present embodiment lies in that the start manner is changed in the shaded pole coil start type by means of an externally added star-switch device, for its cut-off or cut-out to cut off the pole-shaded winding after the motor is started, thereby avoiding the continuous heating of the pole-shaded winding to waste the electric power which, in turn, may cause adverse effects on the magnetic polar distribution wave form and local high temperatures; and more importantly, since the pole-shaded winding is a short-circuit winding, its polarity changes along with the change of the polarity of the magnetic pole with which it couples. When it is used for the pole-changing motor, the pole-shaded coil is to be coupled by the magnetic pole that jointly defines various fixed constant relationships in advance and can be operated and controlled by the simple externally added after-start cut-off switch device, so if compared with the conventional pole-changing motors, the design of present invent ion requires greatly less contact points and connection wires for the external changeover switches, thereby making the connection wiring simplified; and since the conductor winding materials required by the pole-shaded coils are also less, the materials needed are less.
Fig. 1-A is an example of a 4P/8P two-speed motor with two sets of coils of same polarity connected in series, and with a double-throw switch SW101 conducting the serial polarity relationship changes; when the polarity of one set of coils is connected in series with the same polarity of another set, thereby generating the 8P state of the consequent polar effect, to start a pole-shaded coil is provided under various magnetic poles of one set of the coils, and one of the eccentric switch sets F.S. cuts them off before the motor runs at a speed lower that the synchronous r.p.m. stage; or as shown in Fig. 1-B, two sets of coils respectively have a pole-shaded coil, while the eccentric switch has two sets of contact points to cut them off before the motor runs at a speed lower than the low speed synchronous r.p.m. stage.

Further, when the above-said way is applied to the double-winding motor, its advantages become even more apparent as shown in Fig. 2-A, in the drawing, the motor has a 4P/8P travel winding and a 6P/12P travel winding, now the pole-shaded coil for the start will have a variety of winding methods-including the two travel windings which respectively have a pole-shaded coil that are each controlled by the externally added after-start cut-off switch device and the distribution switch after the motor is started; in the way it is used, the changeover switch SW201 distributes them into four-speed connection wirings for the changeover, and the two sets of the pole-shaded coils make the opposite polar changeover dependent upon the speed, and then couple with the common eccentric switch to cut-off the pole-shaded coils after the motor is started.

As to the arrangement of the above-said pole-shaded coils, if there is no need for a large start turning moment motor, eg. for a ventilator, only some of the magnetic poles, fewer than the number of operating poles, can be selected to provide the pole-shaded windings (as shown in Fig. A), and accepting that a part of the start turning moment is sacrificed; materials maybe thus saved, and the simplification of the after-start changeover switch externally added to the operating and controlling pole-shaded coils and the distribution switch can be achieved, in order to enhance ecomomy.

The arrangement of the above-said pole-shaded coils further comprises that when various sets of the pole-shaded coils are separately wound to the maximum number of poles and to their optimum distribution positions relative to various magnetic poles, and with their respective separately externally added after-start cut-off switch devices and the distributions switches are as shown in Fig. 2-B they can respectively make relative matches in accordance with the number of the operating poles.

A further structural form of the above said pole-shaded motor is that both sides of a magnetic pole are respectively provided with a rotatable directional-selective dual-set pole-shaded winding, and that the one of the directional switch sets is selected to start the motor for running in that direction. The example of its application to the most basic traditional single speed motor is shown in Fig. 3-A. A pole-shaded winding is provided respectively on the lead side and the lagging side of each of various magnetic poles; using switch 301 to select changeover, and using an eccentric switch to cut-off the pole-shaded coils. An example having two sets of the pole-shaded coils is shown in Fig. 3-B.

In the above-said examples of the externally added after-start cut-off switch devices in applications can be included that:
(1) An externally added timing switch forms the after-start cut-off device (as shown in Fig. 4-1). In the drawing, the switch SW401 is a power supply switch; SW402 is pole cut-off switch; the timing switch TR401 can cut off this relay after the set time is reached after the motor is started which, in turn, cuts off the pole-shaded coils.
(2) The speed detection and sensing device drives the relay circuit to form the after-start cut-off device as shown in Fig. 4-2; an analogic TG drives the relay RY401 and cuts off the pole-shaded circuit when the set time is reached, in Fig. 4-3, a microprocessor accepts the input from the digital encoder, and using cut-off of the SW402 which runs synchronous with multiple-pole selective switch pre-accepts the inputs of the relative data of the motor rotational speeds from various polar numbers to generate, on time, the instructions to drive the relay RY402 which, in turn, cuts off the pole-shaded coil.
(3) The conventional externally added winding and the travel winding are connected in series with the current relay RY403 to cut off the pole-shaded coil after the motor is started, which as shown in Fig. 4-4 is of the electromagnetic action type, after the motor is started. When the current becomes smaller, RY403 is closed, and lets the pole-shaded coils short circuit. When the start current becomes larger, contact RY403 can trip off to cut off the pole-shaded coils.
(4) The conventional eccentric switch is designed into a multi-set contact point type to cut off the pole-shaded coils after the motor is started as shown in Fig. 4-5.
(5) The manual two-step switch cuts off the pole-shaded coils after the motor is started.

Besides, a more practical design is that the manual pull-start switch and the current start relay are combined into a single integral switch device to conduct the manual start and automatic cut-off for the pole-shaded coils, and the structure of this switch is shown in Fig. 5, 5-1, 5-2. In the drawings:
a pull handle 501 is a pull/push structure to pull on iron 502 which is sidewisely inlaid thereon and has an iron plate 503 that protrudes on its two faces;
at least one or two sets of positioning springs 504 couple to the protruding parts of the above-said sidewise iron plate 503;
a protruding part is provided on one side or two sides of the middle portion of an insulation frame 505 to support the other end of the springs 504 thereby making the insulation frame during the pull conduct 501 the relative position changes along with the pull handle in the double stationary state position;
electric conductive plates 506 & 506' are provided on each of the two sides of the insulation frame; the electric conductive contact points 507, 507', 508 & 508' opposite to the two ends of each of the above-said two electric conductive plates are provided on the bottom of the switch, of which one contact point 507'& 508' on each of its various sides which is between two opposite electric conductive plates is connected to the power supply, while one 508 of the remaining two contact points is directly connected to the load, and the other 507 leads to the current circuit 509, and then to the output pin 510, for being connected to the load therefrom, and
one or more sets of the normal open contact points 511, 512 are connected to the two sides of the pole-shaded coil, and the normally opened contact point can be attracted, when the current to start the motor is higher, and also trip off, when the normal travel current becomes smaller.

As to the above-said device, since at the start of the machine, the start current is larger thus making the coil connected in series with the load attract the normal open contact point set, this makes the pole-shaded coil short-circuit, and thus the motor starts. When and after the motor current surge, the current will gradually drop to its normal value; now that the attractive force of the coil weakens, the normal open contact point restores to the short circuit state, thereby making the pole-shaded coil cut-off and thus the motor will run continuously.

Of the above-said various exemplary types, we firmly believe this wiring is simpler than that of the conventional types; further, compared with the conventional types, I have the following advantages: start windings used less; in terms of the double winding motors, more material saving with a higher efficiency; and if compared with the conventional pole-shaded motors, they have a larger running horse power, with less magnetic loss & with no local high temperatures, and lower noise; To summarise the above, the practicality of the present invention is definite, and its effectivenes is remarkable, so undoubtedly the invention conforms in practicability.
In general, I seek to provide an improved design of the pole-shaded motor which comprises that the motor has two sets of windings, wherein the pole N having fewer wire connections and the pole S having fewer wire connections; the windings having the same polarity are connected in series; the double-throwswitch makes changes their serial relationship when the winding of one set is connected in series with another set of the same polarity, thereby generating the multiplication magnetic polar state of the consequent polar effects to start the pole-shaded coil which is provided under various poles of one set of the coils, and cut off by a set of the eccentric switches before the motor runs below the low speed stage synchronous r.p.m; or two sets of windings respectively have the pole-shaded coils, while the eccentric switch has two sets of contact points to cut the coils cut off before the motor runs be low the low-speed stage synchronous r.p.m.
When this is applied to the double winding motor, its feature lies in that it compromises two travel windings respectively having a pole-shaded coil to be connected separately by the externally added after-start cut-off switch device and the changeover switch device; its changeover switch is to distribute the four-speed winding changeover, and the two sets of the pole-shaded coils are changed over opposite to the poles and along with the speeds, and then couple with the common eccentric switch to change over the pole-shaded coils after the motor is started.
Only some of the poles may be provided with the pole-shaded windings ie fewer than the number of operating poles can be selected.
The pole-shaded coil may further comprise that various sets of the pole-shaded coils are separately wound to the maximum number of poles, and on the distribution positions opposite to various magnetic poles, and respectively have their own separate externally added after-start cut-off switch device and distribution switch device. Rotary directional selective double-set pole-shaded windings are provided on both sides of the magnetic pole respectively, and one of the sets for the selection of the direction switch is a pole-shaded pole and can be selected and used to start the motor running in that direction.
The externally added after-start cut-off switch can comprise: an externally added timing switch; the timing switch can cut off a relay after the set time is reached after the motor is started, which, in turn, cuts off the pole-shaded coil controlled by time switch contact.
The externally added after-start device may comprise an analogic TG to drive a relay when the set time is reached, thereby cutting off the pole-shaded coils.
The externally added after-start cut-off switch device may comprise: a microprocess or which accepts the input of a digital decoder accordingly to cut-off the pole switch and also pre-accepts the input of the inputs of the data relative to the motor running speeds to a various number of poles, thereby generating, on time, the instructions to drive the relay which thus cuts off the pole-shaded coils controlled by delay contact points.
The externally added after-start cut-off switch device can comprise the conventional externally added winding and current relay with travelling winding in series. The externally added after-start cut-off switch device may comprise the conventional eccentric switch designed into a multi-set contact point type or may comprise a manual two-step switch to cut off the pole-shaded coils; or may comprise a manual pull start having the function of a switch, and the current start relay are made into a single integral switch device for manual start and automatic cut-off of the pole-shaded coils, the structure of this switch being as follows:
A handle having a pull/push structure saves to pull an iron rod having an iron plate extending laterally thereof;
at least one or two sets of springs couple to the protruding parts of the above-said sidewise iron plate;
a protruding part is provided on one side or two sides of the middle portion of an insulation frame to support the other end of the springs, thereby making the insulation frame during the pull conduct the relative position changes along with the pull handle in the double state position;
an electric conductive plate is provided on each of the two sides of the insulation frame;
the electric conductive contact points opposite to the two ends of the above-said electric conductive plates are provided on the bottom of the switch, of which one contact point on each of its various sides is connected to the power supply, which one of the remaining two contact points is directly connected to the power supply, while one of the remaining two contact points is directly connected to the load, and the other loads to the current circuit, and then to the output pin for being connected to the lead therefrom, and
one or more of the normal open contact points are connected to the pole-shaded coil, and the normal opened contact point can be attached, when the current to the motor is higher, and also trip off, when the normal contact travel current becomes smaller.

## Claims

1. A shaded pole induction motor comprising a rotor and a stator, the stator including at least one short-circuited motor start-up coil and at least two sets of field windings which can be differently energised in order to charge the number of poles of the motor, characterised by a switch (SW) connected to said sets of field windings to enable one or more of said sets of field windings to be energised and thereby to change the number of poles of the motor, by said at least one motor start-up coil being in a single start-up circuit which is utilised to start the motor irrespective of the pole number selected by said switch (SW), and by switching means (SW,FS,RY,TR) arranged to switch out said motor start-up coil after start-up in response to rotation of the rotor.

2. A motor according to claim 1 characterised in that said switching means is a relay (RY) responsive to current in a rotor winding.

3. A motor according to claim 1 characterised in that said switching means is a timing switch (TR401).

4. A motor according to claim 1 characterised in that said switching means is a centrifugal switch (F.S.).

5. A motor according to any preceding claim characterised in that short-circuited motor start-up coils are provided on both sides of certain field winding magnetic poles to enable the motor to be started in either direction of rotation.

## Patentansprüche

1. Spaltpol-Induktionsmotor mit einem Läufer und einem Ständer, wobei der Ständer wenigstens eine Kurzschluß-Anlaufwicklung und zur Änderung der Polzahl des. Motors wenigstens zwei Gruppen getrennt speisbare Feldwicklungen aufweist,
**gekennzeichnet** durch einen Schalter (SW), der so an die Gruppen von Feldwicklungen angeschlossen ist, daß eine oder mehrere Gruppen von Feldwicklungen gespeist werden können, um so die Polzahl des Motors zu ändern, wobei die wenigstens eine Anlaufwicklung in einem einzelnen Anlaufkreis vorgesehen ist, der zum Starten des Motors unabhängig von der durch den Schalter (SW) gewählten Polzahl verwendet wird, und durch eine Schalteinrichtung (SW, FS, RY, TR), die so ausgebildet ist, daß die Anlaufwicklung nach dem Anlauf bei umlaufendem Läufer ausgeschaltet wird.

2. Motor nach Anspruch 1, dadurch gekennzeichnet, daß die Schalteinrichtung ein auf den Strom in einer Läuferwicklung ansprechendes Relais (RY) ist.

3. Motor nach Anspruch 1, dadurch gekennzeichnet, daß die Schalteinrichtung ein Zeitschalter (TR401) ist.

4. Motor nach Anspruch 1, dadurch gekennzeichnet, daß die Schalteinrichtung ein Zentrifugalschalter (F.S.) ist.

5. Motor nach einem der vorstehenden Ansprüche, dadurch gekennzeichnet, daß auf beiden Seiten bestimmter Feldwicklungs-Magnetpole Anlaufspulen vorgesehen sind, so daß der Motor in beiden Drehrichtungen gestartet werden kann.

## Revendications

1. Moteur à induction à enroulement en court-circuit comprenant un rotor et un stator, le stator comportant au moins un enroulement de démarrage du moteur en court-circuit et au moins deux ensembles d'enroulements de champ magnétique qui peuvent être différemment excités afin de charger le nombre de pôles du moteur, caractérisé par un commutateur (COM) qui est connecté auxdits ensembles d'enroulements magnétiques pour permettre à un ou plusieurs desdits ensembles d'enroulements magnétiques d'être excités et pour inverser de ce fait le nombre de pôles du moteur, caractérisé par ladite au moins une bobine de démarrage du moteur étant dans un circuit de démarrage unique qui est utilisé pour démarrer le moteur sans tenir compte du nombre de pôles sélectionnés par ledit commutateur (COM) et par un moyen de commutation (COM, FS, RY, TR) disposé pour couper ladite bobine de démarrage du moteur après le démarrage en réponse à la rotation du rotor.

2. Moteur selon la revendication 1, caractérisé en ce que ledit moyen de commutation est un relais (RY) sensible au courant dans un enroulement du rotor.

3. Moteur selon la revendication 1, caractérisé en ce que ledit moyen de commutation est un interrupteur temporisé (TR401).

4. Moteur selon la revendication 1, caractérisé en ce que ledit moyen de commutation est un interrupteur centrifuge (FS).

5. Moteur selon l'une quelconque des revendications précédentes, caractérisé en ce que les bobines de démarrage du moteur en court-circuit sont prévues sur les deux côtés de certains pôles magnétiques de l'enroulement magnétique pour permettre au moteur d'être démarré dans chaque sens de rotation.
